# FASCICULE DE BREVET EUROPEEN

(11) **EP 1 179 808 B1**
(45) Date de publication et mention de la délivrance du brevet: **05.04.2006**
(21) Numéro de dépôt: 01870169.8
(22) Date de dépôt: 01.08.2001
(51) Int. Cl.: G06K 19/14, B42D 15/10, G07D 7/12, B41M 3/14

(54) **Dispositif antifraude pour document**
Vorrichtung zum Schutz von Dokumenten vor Verfälschung
Anti-fraud device for document

(30) Priorité: 09.08.2000 EP 00870173
(43) Date de publication de la demande: 13.02.2002
(73) Titulaire: BANQUE NATIONALE DE BELGIQUE S.A., B-1000 Bruxelles (BE)
(72) Inventeur: Veldeman, François, 1330 Rixensart (BE); Salade, Marc, 1490 Court-Saint-Etienne (BE)
(74) Mandataire: Van Straaten, Joop

(56) Documents cités:
- EP-A- 0 721 849
- DE-A- 4 114 732
- FR-A- 2 762 545
- US-A- 4 500 116
- US-A- 4 892 336
- US-A- 5 005 873

## Description

L'invention concerne les dispositifs visant à empêcher la fabrication et l'écoulement de documents frauduleux, dans le domaine notamment du papier-monnaie, des bons, des titres, des cartes de crédit, etc ainsi que des documents munis de tels dispositifs.

Des dispositifs sans cesse plus complexes sont utilisés pour décourager les fraudeurs et les faux-monnayeurs.

Pour un oeil exercé, l'examen visuel est toujours une première barrière efficace pour repérer les falsifications, en dépit de la multiplication de moyens de reproduction.

Cependant, dans certaines transactions, notamment aux heures d'affluence, aux caisses de supermarché, etc., le temps d'examen des documents, nécessairement très court, ne permet d'éliminer que les faux assez grossiers.

L'impression de billets comportant des zones imprimées avec des encres contenant des pigments réagissant aux ultraviolets (émis par exemple par une lampe de Wood) est une méthode permettant un contrôle aisé et rapide.

Dans des banques, offices de change et supermarchés, de nombreux postes sont d'ailleurs équipés d'une zone de contrôle mettant en évidence les zones imprimées fluorescentes.

Cependant, certains fraudeurs arrivent à obtenir des substituts trompeurs de cet effet fluorescent, d'où un risque effectif que l'opérateur se laisse abuser par une impression «globale» satisfaisante, en dépit de l'inadéquation manifeste des couleurs et/ou des motifs.

Des cas de contrefaçon sont connus où les faussaires utilisent un marqueur pour donner l'apparence de la présence de la protection par encre fluorescente.

Ce phénomène n'est pas lié à un manque d'attention de la personne effectuant le contrôle : outre le faible éclairement nécessaire à la mise en évidence de la fluorescence, l'oeil humain travaille là dans des conditions anormales, sans points de repère familiers (couleurs, position, forme).

En outre, l'état des documents examinés vu leurs conditions de manipulation, entraîne des fausses alertes fréquentes

On connaît par US 5 005 874, considéré comme le plus proche état de la technique, un procédé pour l'authentification d'articles comprenant des marques réalisées en matériaux fluorescents réagissant sous différentes longueurs d'ondes UV en émettant des couleurs différentes.

On a donc cherché un dispositif qui permet un contrôle rapide ne présentant pas les inconvénients décrits ci-dessus.

Le but de l'invention est de rendre ce type de contrefaçon plus difficile ou impossible et d'augmenter la confiance du public notamment dans la monnaie-papier, par la mise sur le marché d'un dispositif qui permet un procédé de contrôle rapide et fiable de l'authenticité de documents.

L'objet de l'invention est un dispositif antifraude pour document comprenant un support et au moins deux motifs apposés sur ledit support; un de ces motifs comprend une première encre réagissant à un rayonnement ultraviolet d'une longueur d'onde donnée en émettant une couleur déterminée, un autre de ces motifs comprend une deuxième encre les compositions de la première et de la deuxième encre, en particulier les pourcentages des substances mises en jeu sont choisies de façon à ce que les deux encres réagissent à un rayonnement ultraviolet de la même longueur d'onde en émettant des couleurs identiques les deux encres émettent des couleurs différentes entre elles lorsqu'elles sont soumises à un rayonnement ultraviolet d'une deuxième longueur d'onde.

De ce fait, sous une source lumineuse UV produisant la première longueur d'onde, les encres composant les deux motifs réagissent en produisant un même signal et une première image d'une couleur uniforme composée par ces deux motifs apparaît; par contre, sous l'éclairement d'une source produisant la seconde longueur d'onde UV les deux motifs se différencient et donnent une deuxième image bicolore, cette seconde image s'intégrant dans la première image. Le fait que la seconde image fait partie de la première image permet un contrôle rapide.

En conséquence, la falsification de documents à l'aide d'un marqueur donnant l'apparence de la présence d'une encre fluorescente n'est plus possible. Même une falsification hypothétique de documents protégés par deux marqueurs différents réagissant à la même longueur d'onde en émettant des couleur différentes ou la falsification de documents protégés par un marqueur réagissant à deux longueurs d'onde en émettant des couleurs différentes ne parvient pas à produire un effet comparable, même de loin, à celui obtenu par le présent procédé.

Suivant une forme de réalisation avantageuse l'un et l'autre des motifs apposés sur le support se recouvrent au moins partiellement ou sont contigus.

De ce fait il ne se produit pas de discontinuité apparente dans la première image.

Suivant une forme de réalisation avantageuse l'encre utilisée pour imprimer l'une des première et deuxième encres ne comprend pas de pigment réagissant à la deuxième longueur d'onde. De ce fait le motif en question est absent dans la deuxième image.

Une comparaison par visualisation directe devient plus facile, rapide et précise si la couleur émise par un de ces motifs reste la même sous les illuminations U.V. différentes, ce qui est une forme de réalisation avantageuse de l'invention.

L'un et l'un autre de ces motifs peuvent former des bandes parallèles ou des bandes concentriques; suivant une forme de réalisation avantageuse, l'un de ces motifs comprend un premier réseau de guillochis et l'autre un deuxième réseau de guillochis en concordance avec le premier. Des réseaux de guillochis concordant sont en effet très difficile à falsifier.

Combinant différentes encres, tout en étant simple à mettre en oeuvre, le dispositif de l'invention met hors de portée des fraudeurs, et surtout des fraudeurs occasionnels, la réalisation de documents falsifiés d'aspect convaincant.

Un autre objet de l'invention est un document comportant un dispositif tel que décrit ci-dessus.

L'invention a également pour objet un procédé d'authentification de document ou de dispositif qui comprend les opérations suivantes :
- élaborer au moins deux motifs,
- imprimer en alternance ces au moins deux motifs sur un support d'un document à l'aide d'encres contenant des pigments fluorescents, l'encre d'un de ces motifs réagissant à une première longueur d'onde UV donnée en émettant une couleur déterminée, l'encre d'un autre de ces motifs réagissant à la même première longueur d'onde UV en émettant la même couleur déterminée mais les deux encres, lorsqu'elles sont soumises à un rayonnement ultraviolet d'une deuxième longueur d'onde, émettant des couleurs différentes entre elles,
- soumettre le document ainsi traité alternativement à une double sources de rayonnement U.V émettant respectivement la première longueur d'onde donnée et la deuxième longueur d'onde,
- vérifier la présence d'une première image composée de ces au moins deux motifs sous le rayonnement de la source produisant la première longueur d'onde et d'une deuxième image sous le rayonnement de la seconde longueur d'onde.

La vérification peut s'accompagner au besoin d'une comparaison à des signaux de référence.

Même en laissant de côté les problèmes liés à l'approvisionnement en encres spéciales etc., le dispositif de l'invention entraîne une série de difficultés fortement accrue pour les candidats fraudeurs.

Un avantage de l'invention est que des modifications mineures suffisent pour y adapter les postes de contrôle sous U.V. existants sur le marché.

Le dispositif ne servant pas à un contrôle visuel primaire, la qualité des images engendrées a relativement peu d'importance, ce qui rend ce type de protection peu sensible à la dégradation.

Outre le fait qu'il facilite un contrôle visuel rapide, le dispositif peut être facilement doublé d'un poste de contrôle, automatisé au besoin. Le dispositif de l'invention est de préférence utilisé en complément d'autres moyens de prévention de la fraude, sans interférer avec ceux-ci.

D'autres particularités et avantages de l'invention ressortiront de la description ci-après de modes de réalisation particuliers de l'invention, référence étant faite aux dessins annexés dans lesquels :
la Fig. 1 est une vue en plan de deux motifs;
la Fig. 2 est encore un plan de l'impression en bandes alternées des deux motifs de la Fig. 1 sur un support;
la Fig. 3 est une vue schématique en coupe d'un document muni du dispositif de l'invention soumis à examen;
les Figures 4A, 4B, 5A et 5B sont des graphiques chromatiques illustrant quelques modes de réalisation de l'invention.

Les Figures 6A, 6B et 6C sont des graphiques illustrant l'émission d'encres, soumises à l'action d'un rayonnement ultraviolet de 365 nm (Fig. 6A et 6C) et 254 nm (Fig. 6B et 6C).

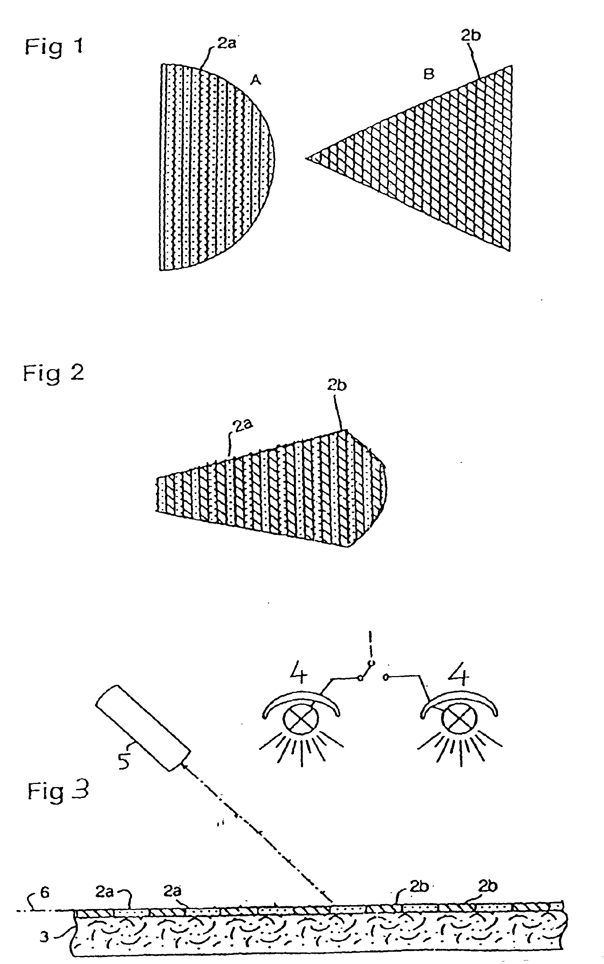

La Fig. 1 montre deux motifs A et B qui diffèrent ici l'un de l'autre en ce qu'un de ces motifs est imprimé à l'aide d'une encre réagissant à une première longueur d'onde donnée en émettant une couleur donnée, et l'autre de ces motifs à l'aide d'une encre différente, réagissant à la même longueur d'onde en émettant la même couleur mais réagissant également à une deuxième longueur d'onde en émettant une autre couleur.

Dans l'exemple de la Fig. 1 chacun de ces motifs A et B est divisé en bandes parallèles 2a, 2b.

La Fig. 2 montre la façon dont les bandes 2a et 2b formant ces deux motifs sont imprimées sur un support : les bandes respectives de chacun des motifs sont disposées côte à côte en alternance.

Les encres utilisées pour l'impression des deux motifs sont chargées de pigments qui, soumis à l'action d'un rayonnement ultraviolet, émettent un rayonnement dans le visible. Soumis à l'action du rayonnement de la première longueur d'onde donnée l'un (A) et l'autre (B) des motifs émet une même couleur donnée. Le fraudeur potentiel à donc l'impression que le document muni du dispositif de l'invention ne comporte qu'un motif. Toutefois, lorsque le document est soumis à l'action d'un rayonnement de la deuxième longueur d'onde donnée, une "partie" de ce motif unique apparaît en une couleur différente, l'autre "partie" apparaissant en une autre couleur.

La Fig. 3 illustre, hors d'échelle, le principe du contrôle, tant visuel qu'automatisé, de l'authenticité d'un document.

Le support 3 sur lequel sont imprimées les bandes alternées 2a, 2b est placé dans un lecteur optique comprenant une chambre éclairée alternativement par deux sources de lumière ultraviolette 4, qui émettent respectivement la première longueur d'onde donnée et la deuxième longueur d'onde.

Le support 3 muni du dispositif est placé dans une zone ou une chambre partiellement occultée et soumise à ces rayonnements U.V.

Dans une version automatisée du même contrôle, on fait appel, comme représenté à la Fig. 3, plutôt qu'à l'oeil de l'observateur, à un capteur optique 5 placés dans la chambre de contrôle par rapport au plan de référence 6. La première image obtenue peut être comparée, via un ordinateur, avec une image standard, de même que la deuxième image, qui peut être comparée avec une autre image standard. Un grand avantage de l'invention est que la position de la première image peut être comparée directement, avec une bonne résolution, avec la position de la deuxième image. De ce fait la falsification de documents protégés par deux marqueurs différents devient extrêmement difficile, même si les fraudeurs utilisaient des encres de la même composition que celles des documents originaux. De façon avantageuse, l'un et l'autre des motifs apposés sur le support se recouvrent au moins partiellement ou sont contigus. De ce fait il ne se produit pas de discontinuité apparente dans la première image, ce qui renforce l'impression des fraudeurs que le document original ne comporte qu'un motif, mais rend aussi la comparaison entre la première et la deuxième image plus facile et avec une plus haute résolution.

Il va de soi que plusieurs dispositifs peuvent être apposés sur un même document.

Dans les Fig. 1 à 3, le nombre des motifs distincts a été, pour des raisons de clarté, limité à deux, mais il va de soi que le présent principe reste valable si plus de deux motifs sont utilisés.

Un moyen de repérage (non représenté), lié éventuellement à un moyen d'entraînement, peut contrôler la position du document par rapport au capteur.

Le lecteur optique peut, de même, être muni, en fonction des critères énoncés ci-dessus, de plus d'un capteur. Le capteur peut être muni de filtres interchangeables correspondant à différentes longueurs d'ondes.

Chaque motif ou leur combinaison peut, en outre, servir de support à un code (tel qu'un code barre) propre au document ou, par exemple, à sa série de fabrication.

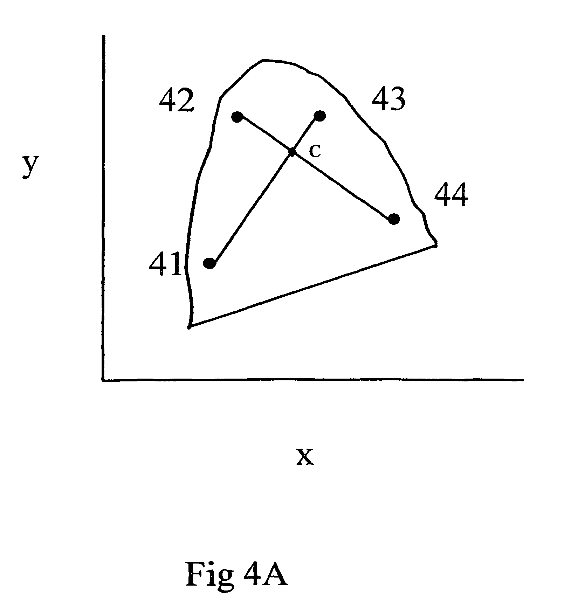

La Fig. 4A est une représentation graphique de la lumière émise par des encres sous un éclairage donné et montrant le triangle de couleur. L'axe horizontal mesure la valeur x d'une couleur, l'axe vertical la valeur y d'une couleur. Chaque couleur émise est définie par une valeur de x et une valeur de y. Dans cet exemple on utilise une première encre contenant un premier pigment (ou une autre substance réagissant à la lumière) réagissant à l'illumination d'une première longueur d'onde en émettant de la lumière correspondant à un point-couleur 41, et un deuxième pigment réagissant à cette première longueur d'onde en émettant de la lumière correspondant à un point-couleur 43. La palette de couleurs obtenue en agissant sur les proportions relatives des deux pigments suit le segment 41-42. Le segment 2b correspond à une encre contenant un troisième pigment réagissant à l'illumination de la même longueur d'onde en émettant de la lumière correspondant à un point couleur 42, et un quatrième pigment réagissant à l'illumination de la même longueur d'onde en émettant de la lumière correspondant à un point-couleur 44. La palette de couleurs que l'on peut obtenir avec la deuxième encre est définie par le segment la ligne 42-44. Si les lignes 41-43 et 42-44 se croisent, il est possible d'obtenir par un dosage correcte des pigments des encres restituant la même couleur. On constate que les segments présentent bien ici un point commun CP à leur intersection (indiquée par un rectangle). La composition des encres, en particulier les pourcentages des substances mises en jeu est choisie de façon à ce que les points-couleur et, si on le désire, l'intensité des deux encres soient (virtuellement) identiques; de cette façon, les parties imprimées donnent l'impression que le document original ne comporte qu'un seul motif de couleur homogène.

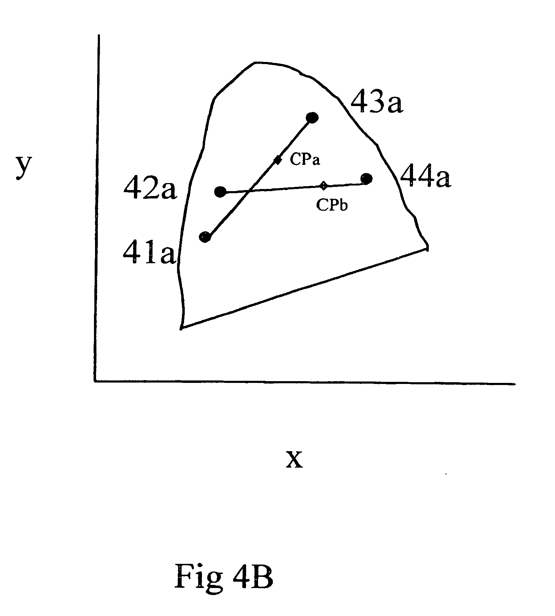

La Fig. 4B illustre ce qui se passe lorsque les deux mêmes encres sont soumises à l'illumination d'une deuxième longueur d'onde. Les points-couleur des différents pigments sont différents (le point-couleur 41 est devenu 41a, le point-couleur 42 est devenu 42a, etc.) et les points-couleur, définis par les proportions relatives des pigments dans les deux encres pour obtenir le point CP de la Fig. 4A, sont différents. CPa, le point-couleur de la première encre, et CPb, le point-couleur de la deuxième encre ne coïncident plus. Ainsi, sous l'illumination de la deuxième longueur d'onde, les deux bandes 2a et 2b se distinguent clairement. Il est aussi possible qu'un ou plusieurs des pigments utilisés n'émettent tout simplement pas de lumière sous l'une des longueur d'onde. Dans ce cas le point couleur de l'encre utilisant ce composant est un des points extrêmes 41a, 42a, 43a ou 44a.

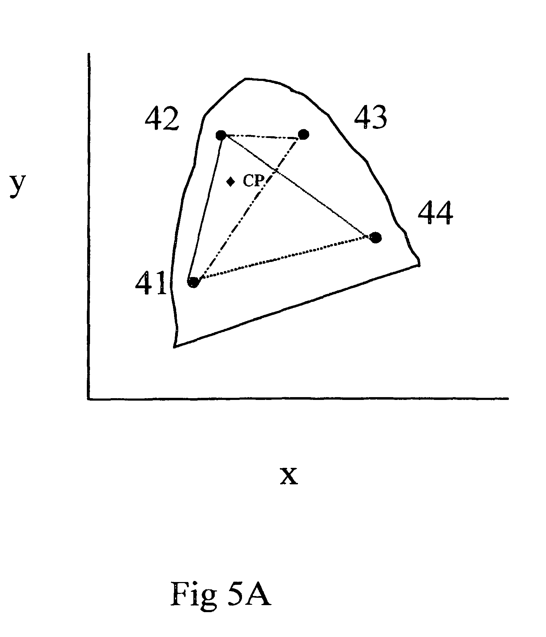

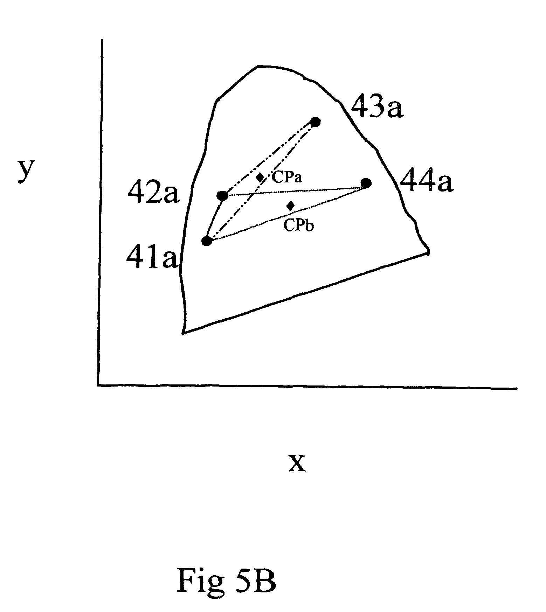

Les figures 5A et 5B illustrent un mode de réalisation dans lequel la première encre comporte cette fois trois pigments réagissant à l'illumination en donnant respectivement les points couleur 41, 42 et 43. La deuxième encre comprend deux pigments (ou substances réagissantes) identiques à ceux de la première encre (et permet donc d'obtenir également les point-couleurs 41 et 42) ainsi qu'une autre substance dont le point-couleur se situe en 44. Dans ce cas, c'est dans la zone commune au deux triangles 41-42-43 et 41-42-44 que se situent les points-couleur CPs communs aux deux encres soumises à l'illumination de la première longueur d'onde (Fig. 5A). en utilisant les proportions adéquates, les deux bandes forment ici également un seul motif de couleur homogène. Sous l'illumination de la deuxième longueur d'onde, par contre (voir Fig. 5B), les points-couleur des encres diffèrent (CPa et CPb) et les deux bandes se distinguent clairement. Il va de soi qu'en pratique les encres peuvent comporter plus de deux ou trois substances réagissant à la lumière. De même, les deux peuvent incorporer un nombre inégal de pigments. Il est ainsi possible qu'une des encres comporte trois pigments (ou substances réagissentes) ce qui permet d'obtenir une couleur quelconque comprise dans l'aire du triangle 41, 42 et 43, l'autre encre ne comportant qu'une seule substance active, dans la mesure où son point-couleur est également situé dans le triangle 41, 42, 43. Une telle encre est relativement simple à fabriquer.

De même, la première encre et la deuxième encre peuvent comporter un ou plusieurs pigments communs réagissant à l'illumination de la première longueur d'onde en émettant de la lumière avec un point-couleur 41, 42, 43 ou 44, la première encre ne comportant que ce pigment commun ou ces pigments communs, la deuxième encre comportant en plus au moins un pigment qui ne réagit pas à l'illumination de la première longueur d'onde, en réagissant à l'illumination de la deuxième longueur d'onde. Il est avantageux, pour des raisons d'économie, d'utiliser des encres ayant des pigments communs.

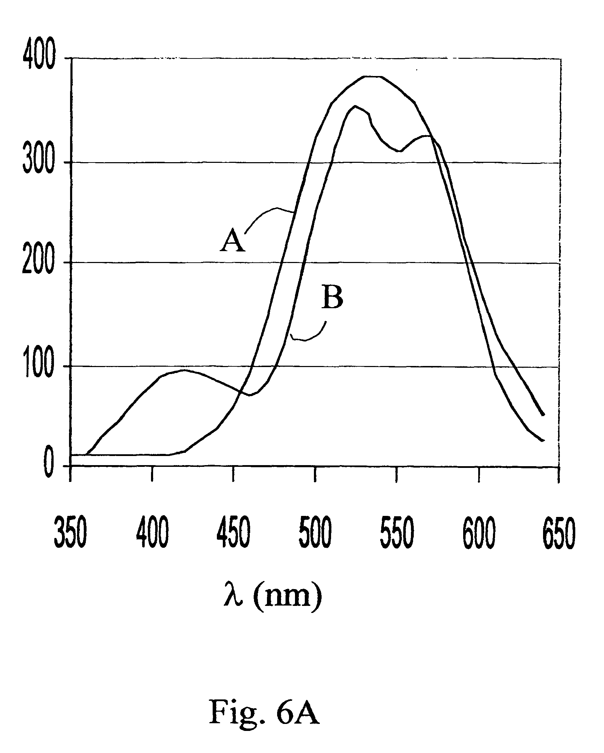

La Figure 6A illustre, sous la forme d'un graphique, le spectre d'émission secondaire d'une première encre (A) et d'une deuxième encre (B) soumises à l'action d'un même rayonnement ultraviolet de 365 nm. Les deux spectres d'émission secondaire sont comparables et en conséquence les deux encres ont la même couleur.

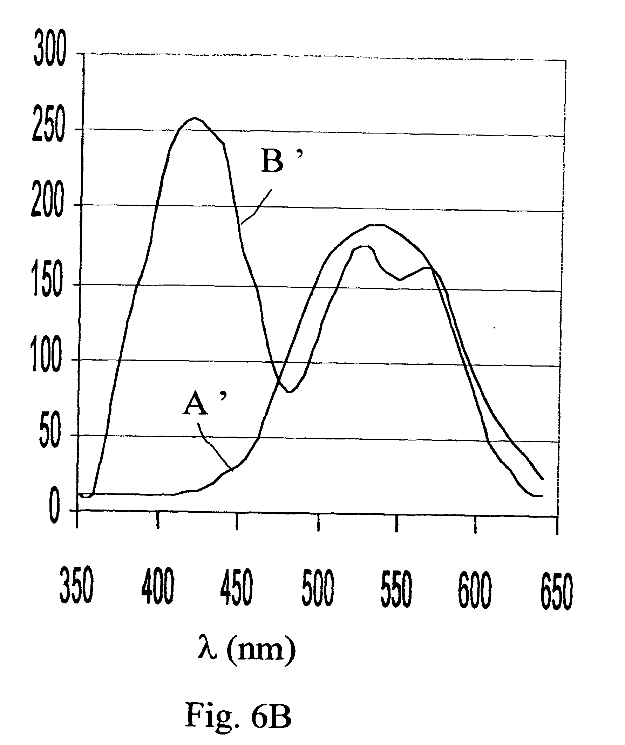

La Figure 6B représente le spectre d'émission secondaire de ces mêmes encres soumises cette fois à l'action d'un rayonnement ultraviolet de 254 nm. Les spectres d'émission secondaire se différencient nettement : les deux encres apparaissent donc sous des couleurs différentes. Cet exemple illustre un mode de réalisation préférentiel, où le spectre d'émission A de la première encre reste sensiblement identique, qu'elle soit soumise à la première (Fig. 6a) ou à la deuxième longueur d'onde (Fig. 6b). De ce fait cette première encre a la même couleur sous l'une (365 nm) et sous l'autre (254 nm) illumination UV. Une comparaison même visuelle directe (voir Fig. 3) devient plus facile, rapide et précise.

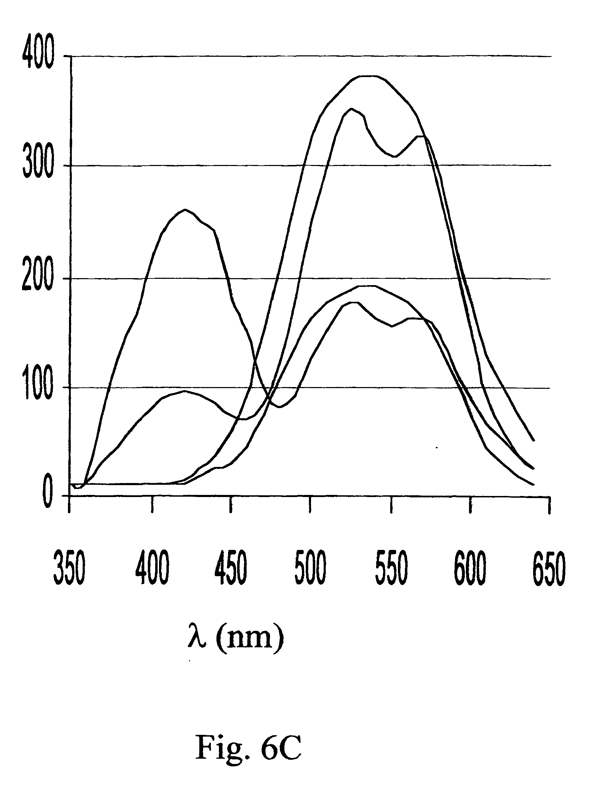

La Figure 6C combine sur un même graphique les courbes des Figures 6A et 6B.

Par ailleurs, il est généralement avantageux que la première et la deuxième encre présentent la même couleur lorsqu'elles sont soumises à l'action d'un rayonnement visible (entre 450 et 750 nm).

De ce fait, en lumière ambiante normale (proche du rayonnement solaire), les encres composant les deux motifs présentent la même couleur et une seule image apparaît, ce qui en renforce l'impression que l'on est en présence d'un motif unique de couleur uniforme.

## Revendications

1. Dispositif antifraude pour document comprenant un support (3) et au moins deux motifs (A, B) imprimés apposés sur ledit support (3), un de ces motifs (A,B) comprenant une première encre réagissant à un rayonnement ultraviolet d'une longueur d'onde donnée en émettant une couleur déterminée, un autre de ces motifs (B,A) comprend une deuxième encre **caractérisé en ce que** les compositions de la première et de la deuxième encre, en particulier les pourcentages des substances mises en jeu sont choisies de façon à ce que les deux encres réagissent à un rayonnement ultraviolet de la même longueur d'onde en émettant des couleurs identiques les deux encres, lorsqu'elles sont soumises à un rayonnement ultraviolet d'une deuxième longueur d'onde, émettant des couleurs différentes entre elles.

2. Dispositif antifraude suivant la revendication 1 **caractérisé en ce que** l'un et l'autre des motifs apposés sur le support se recouvrent au moins partiellement ou sont contigus.

3. Dispositif antifraude suivant l'une quelconque des revendications 1 et 2 **caractérisé en ce que** l'une des première et deuxième encres ne comprend pas de pigment réagissant à la deuxième longueur d'onde.

4. Dispositif antifraude suivant l'une quelconque des revendications 1 à 3 **caractérisé en ce que** l'un de ces motifs comprend un premier réseau de guillochis et l'autre de ces motifs comporte un deuxième réseau de guillochis en concordance avec le premier.

5. Dispositif antifraude suivant l'une quelconque des revendications 1 à 4, **caractérisé en ce que** la couleur d'un ou l'autre de ces motifs est la même lorsque elle est soumis à un rayonnement ultraviolet de la première et de la deuxième longueur d'onde.

6. Dispositif antifraude suivant l'une quelconque des revendications 1 à 4, **caractérisé en ce que** la longueur d'onde du premier rayonnement est d'environ 365 nm et la longueur d'onde du deuxième rayonnement est d'environ 254 nm.

7. Dispositif suivant l'une quelconque des revendications 1 à 6 **caractérisé en ce que** la première et la deuxième encre ont la même couleur lorsqu'elles sont soumises à l'action d'un rayonnement visible.

8. Document comprenant un dispositif anti-fraude suivant l'une quelconque des revendications 1 à 7.

9. Document comprenant un support (3) et au moins deux motifs (A, B) imprimés apposés sur ledit support (3), un de ces motifs comprend une première encre réagissant à un rayonnement ultraviolet d'une longueur d'onde donnée en émettant une couleur déterminée, un autre de ces motifs comprenant une deuxième encre **caractérisé en ce que** les compositions de la première et de la deuxième encre, en particulier les pourcentages des substances mises en jeu sont choisies de façon à ce que les deux encres réagissent à un rayonnement ultraviolet de la même longueur d'onde en émettant des couleurs identiques, les deux encres, lorsqu'elles sont soumises à un rayonnement ultraviolet d'une deuxième longueur d'onde émettant des couleurs différentes entre elles.

10. Procédé d'authentification de document qui comprend les opérations suivantes :
- élaborer au moins deux motifs,
- imprimer en alternance ces au moins deux motifs sur un support à l'aide d'encres contenant des pigments fluorescents un de ces motifs comprenant une encre réagissant à une longueur d'onde U.V. donnée et émettant une couleur donnée, un autre de ces motifs comprenant une deuxième encre les compositions de la première et de la deuxième encre, en particulier les pourcentages des substances mises en jeu sont choisies de façon à ce que les deux encres réagissant à la même longueur d'onde U.V. en émettant des couleurs identiques mais les deux encres, lorsqu'elles sont soumises à un rayonnement ultraviolet d'une deuxième longueur d'onde, émettant des couleurs différentes entre elles,
- soumettre le document ainsi traité alternativement à un système de rayonnement U.V émettant la première et la deuxième longueur d'onde,
- vérifier la présence d'une première image composée de ces au moins deux motifs sous la première longueur d'onde et d'une deuxième image différente de la première sous la seconde longueur d'onde.

## Patentansprüche

1. Vorrichtung zum Schutz eines Dokuments vor Fälschung, welche einen Träger (3) und mindestens zwei aufgedruckte Motive (A, B) umfasst, die auf den Träger (3) aufgebracht sind, wobei eines dieser Motive (A, B) eine erste Tinte umfasst, welche auf eine ultraviolette Strahlung einer gegebenen Wellenlänge reagiert, indem sie eine bestimmte Farbe ausstrahlt, ein anderes dieser Motive (B, A) eine zweite Tinte umfasst, **dadurch gekennzeichnet, dass** die Zusammensetzungen der ersten und der zweiten Tinte, insbesondere die Prozentsätze der Substanzen, die eingesetzt werden, derart ausgewählt sind, dass die beiden Tinten auf eine ultraviolette Strahlung derselben Wellenlänge reagieren, indem sie identische Farben ausstrahlen, wobei die beiden Tinten, wenn sie einer ultravioletten Strahlung einer zweiten Wellenlänge ausgesetzt sind, voneinander unterschiedliche Farben ausstrahlen.

2. Vorrichtung zum Schutz vor Fälschung nach Anspruch 1, **dadurch gekennzeichnet, dass** das eine und das andere der Motive, die auf den Träger aufgebracht sind, sich mindestens teilweise überlagern oder aneinander angrenzen.

3. Vorrichtung zum Schutz vor Fälschung nach irgendeinem der Ansprüche 1 und 2, **dadurch gekennzeichnet, dass** eine, die erste oder die zweite Tinte kein Pigment enthält, das auf die zweite Wellenlänge reagiert.

4. Vorrichtung zum Schutz vor Fälschung nach irgendeinem der Ansprüche 1 bis 3, **dadurch gekennzeichnet, dass** eines dieser Motive ein erstes Guilloche-Liniennetz aufweist, und das andere dieser Motive ein zweites Guilloche-Liniennetz in Übereinstimmung mit dem ersten aufweist.

5. Vorrichtung zum Schutz vor Fälschung nach irgendeinem der Ansprüche 1 bis 4, **dadurch gekennzeichnet, dass** die Farbe von dem einen oder dem anderen dieser Motive dieselbe ist, wenn sie einer ultravioletten Strahlung mit der ersten Wellenlänge und mit der zweiten Wellenlänge ausgesetzt wird.

6. Vorrichtung zum Schutz vor Fälschung nach irgendeinem der Ansprüche 1 bis 4, **dadurch gekennzeichnet, dass** die Wellenlänge der ersten Strahlung bei ungefähr 365 nm und die Wellenlänge der zweiten Strahlung bei ungefähr 254 nm liegt.

7. Vorrichtung nach irgendeinem der Ansprüche 1 bis 6, **dadurch gekennzeichnet, dass** die erste Tinte und die zweite Tinte dieselbe Farbe aufweisen, wenn sie der Wirkung einer sichtbaren Strahlung ausgesetzt sind.

8. Dokument, das eine Vorrichtung zum Schutz vor Fälschung nach irgendeinem der Ansprüche 1 bis 7 aufweist.

9. Dokument, einen Träger (3) und mindestens zwei aufgedruckte Motive (A, B) umfassend, die auf den Träger (3) aufgebracht sind, wobei eines dieser Motive eine erste Tinte umfasst, welche auf eine ultraviolette Strahlung einer gegebenen Wellenlänge reagiert, indem sie eine bestimmte Farbe ausstrahlt, ein anderes dieser Motive eine zweite Tinte umfasst, **dadurch gekennzeichnet, dass** die Zusammensetzungen der ersten und der zweiten Tinte, insbesondere die Prozentsätze der Substanzen, die eingesetzt werden, derart ausgewählt sind, dass die beiden Tinten auf eine ultraviolette Strahlung derselben Wellenlänge reagieren, indem sie identische Farben ausstrahlen, wobei die beiden Tinten, wenn sie einer ultravioletten Strahlung mit einer zweiten Wellenlänge ausgesetzt sind, voneinander unterschiedliche Farben ausstrahlen.

10. Verfahren zur Authentifizierung eines Dokuments, das die nachfolgenden Vorgänge umfasst:
- Erarbeiten von mindestens zwei Motiven,
- abwechselndes Drucken dieser mindestens zwei Motive auf einen Träger mittels Tinten, die fluoreszierende Pigmente enthalten, wobei eines dieser Motive eine Tinte umfasst, die auf eine gegebene ultraviolette Wellenlänge reagiert und eine gegebene Farbe ausstrahlt, ein anderes dieser Motive eine zweite Tinte umfasst, wobei die Zusammensetzungen der ersten und der zweiten Tinte, insbesondere die Prozentsätze der eingesetzten Substanzen dergestalt ausgewählt sind, dass die beiden Tinten auf dieselbe ultraviolette Wellenlänge reagieren, indem sie identische Farben ausstrahlen, aber die beiden Tinten, wenn sie einer ultravioletten Strahlung mit einer zweiten Wellenlänge ausgesetzt sind, voneinander unterschiedliche Farben ausstrahlen,
- Aussetzen des so behandelten Dokuments einem System mit ultravioletter Strahlung, das abwechselnd die erste und die zweite Wellenlänge ausstrahlt,
- Überprüfen des Vorhandenseins eines ersten Bildes, das aus diesen mindestens zwei Motiven unter der ersten Wellenlänge aufgebaut wird, und eines zweiten von dem ersten unterschiedlichen Bildes unter der zweiten Wellenlänge.

## Claims

1. Anti-fraud device for a document comprising a support (3) and at least two printed patterns (A, B) affixed to the said support (3), one of these patterns (A, B) containing a first ink that reacts to ultraviolet radiation of a given wavelength by emitting a specified colour, another of these patterns (B, A) contains a second ink **characterized in that** the compositions of the first and second inks, in particular the percentage concentrations of the substances involved, are chosen so that the two inks react to ultraviolet radiation of the same wavelength by emitting identical colours, the two inks, when they are exposed to ultraviolet radiation of a second wavelength, emitting colours that differ from each other.

2. Anti-fraud device according to Claim 1, **characterized in that** the two patterns affixed to the support overlap at least partially or are contiguous.

3. Anti-fraud device according to either of Claims 1 and 2, **characterized in that** one of the first and second inks does not contain a pigment that reacts to the second wavelength.

4. Anti-fraud device according to any one of Claims 1 to 3, **characterized in that** one of these patterns is a first guilloche pattern and the other of these patterns is a second guilloche pattern in harmonization with the first.

5. Anti-fraud device according to any one of Claims 1 to 4, **characterized in that** the colour of one or other of these patterns is the same when it is exposed to ultraviolet radiation of the first and the second wavelength.

6. Anti-fraud device according to any one of Claims 1 to 4, **characterized in that** the wavelength of the first radiation is about 365 nm and the wavelength of the second radiation is about 254 nm.

7. Device according to any one of Claims 1 to 6, **characterized in that** the first and second inks have the same colour when they are exposed to the action of visible radiation.

8. Document comprising an anti-fraud device according to any one of Claims 1 to 7.

9. Document comprising a support (3) and at least two printed patterns (A, B) affixed to the said support (3), one of these patterns comprises a first ink that reacts with ultraviolet radiation of a given wavelength by emitting a specified colour, another of these patterns containing a second ink, **characterized in that** the compositions of the first and second inks, in particular the percentage concentrations of the substances involved, are chosen so that the two inks react to ultraviolet radiation of the same wavelength by emitting identical colours, the two inks, when they are exposed to ultraviolet radiation of a second wavelength emitting colours that differ from each other.

10. Document authentication method that comprises the following operations:
- at least two patterns are produced;
- these at least two patterns are printed alternately on a support using inks containing fluorescent pigments, one of these patterns comprising an ink that reacts to a given UV wavelength by emitting a given colour, another of the these patterns comprising a second ink, the compositions of the first and second inks, in particular the percentage concentrations of the substances involved, are chosen so that the two inks react to the same UV wavelength by emitting identical colours, but the two inks when they are exposed to ultraviolet radiation of a second wavelength, emitting colours that differ from each other;
- the document thus treated is exposed alternately to a UV radiation system that emits the first and second wavelengths; and
- the presence of a first image made up from these at least two patterns when exposed to the first wavelength and the presence of a second image different from the first when exposed to the second wavelength are verified.
